(19) **Europäisches Patentamt / European Patent Office / Office européen des brevets**

(11) **EP 3 908 804 B1**

(12) **EUROPÄISCHE PATENTSCHRIFT**

(45) Veröffentlichungstag und Bekanntmachung des Hinweises auf die Patenterteilung:
**24.01.2024 Patentblatt 2024/04**

(21) Anmeldenummer: **19816612.6**

(22) Anmeldetag: **03.12.2019**

(51) Internationale Patentklassifikation (IPC):
**G01C 19/5776** $^{(2012.01)}$ **G01D 1/06** $^{(2006.01)}$
**G01D 21/00** $^{(2006.01)}$ **H03H 17/06** $^{(2006.01)}$
**H04L 7/00** $^{(2006.01)}$ **G01P 7/00** $^{(2006.01)}$

(52) Gemeinsame Patentklassifikation (CPC):
**G01C 19/5776; G01D 21/00; H04L 7/005**

(86) Internationale Anmeldenummer:
**PCT/EP2019/083456**

(87) Internationale Veröffentlichungsnummer:
**WO 2020/143959 (16.07.2020 Gazette 2020/29)**

(54) **VERFAHREN ZUM AUSLESEN VON DATEN VON INERTIALSENSOREN**

METHOD FOR READING DATA OF INERTIAL SENSORS

PROCEDE POUR LIRE LES DONNEES DE CAPTEURS INERTIELS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.01.2019 DE 102019100507**

(43) Veröffentlichungstag der Anmeldung:
**17.11.2021 Patentblatt 2021/46**

(73) Patentinhaber: **Northrop Grumman LITEF GmbH 79115 Freiburg (DE)**

(72) Erfinder: **RUF, Markus 79183 Waldkirch (DE)**

(74) Vertreter: **Müller Hoffmann & Partner Patentanwälte mbB St.-Martin-Strasse 58 81541 München (DE)**

(56) Entgegenhaltungen:
**DE-A1-102013 020 954**

EP 3 908 804 B1

**Beschreibung**

Die vorliegende Erfindung betrifft ein Verfahren zum Auslesen von Daten von Sensoren, insbesondere von Inertialsensoren, und Sensoren, die geeignet sind, das Verfahren auszuführen.

In Inertialsensoren (Inertial Measurement Units, IMU) wie etwa Drehratensensoren oder Beschleunigungssensoren werden Teilinkremente mit einem internen Datenpfadtakt der Frequenz $f_a$ akkumuliert. Das heißt, eine Folge von Messdaten wird derart erzeugt, dass in Abständen der Periodendauer $1/f_a$ des internen Datenpfadtaktes Änderungen der Messdaten erzeugt bzw. aufgezeichnet werden. Diese Änderung erfolgt also schrittweise oder inkrementell zu Einlesezeitpunkten der Daten, die durch die Einlesefrequenz bzw. den Datenpfadtakt $f_a$ vorgegeben sind.

Bei Drehratensensoren werden zum Beispiel die zum jeweiligen Datenpfadtakt gehörenden Teilwinkelinkremente fortlaufend akkumuliert, während bei Beschleunigungsmessern die zum jeweiligen Datenpfadtakt gehörenden Teilgeschwindigkeitsinkremente akkumuliert werden.

Mit jedem Abfragetakt einer Auslesefrequenz $f_s$ wird der momentane Stand dieses Akkumulators gelesen und danach für das nächste Integrationsintervall auf 0 zurückgesetzt. Der Stand des gelesenen Akkumulators repräsentiert das Gesamtinkrement im jeweiligen Abfragetakt bzw. die ausgelesenen Messdaten.

Ein Benutzer solcher Sensoren, wie z. B. ein inertiales Navigationssystem, erwartet, dass die ausgelesenen Messdaten, d.h. das Gesamtinkrement im jeweiligen Abfragetakt, exakt der Integration der erzeugten Messdatenänderung über den Abfragetakt entspricht. Die auslesbaren Daten werden aber durch Akkumulation über eine ganzzahlige Anzahl von Datenpfadtakten gebildet, die ungleich dem Abfragetakt ist. Deshalb repräsentieren die zu einem Auslesezeitpunkt ausgelesenen Daten im Allgemeinen die tatsächlich bis zu diesem Zeitpunkt angefallene Bewegung nicht vollständig.

Zusätzlich müsste, falls eine ganzzahlige Anzahl von Datenpfadtakten genau dem Abfragetakt entsprechen sollte, eine exakte Synchronisation beider Takte gewährleistet sein, weil sonst kleinste Frequenzabweichungen zu Schwebungseffekten in der Zahl der Akkumulationen führen.

Eine Lösungsmöglichkeit für die oben beschriebene Problemstellung ist in der DE 10 2013 020 954 beschrieben.

Dieses Patent setzt jedoch die Kenntnis der Auslesefrequenz $f_s$ des Abfragetaktes auf Seiten des Sensors voraus (Master-Betrieb). Dies ist z.B. bei einer IMU gegeben, die den Abfragetakt für ihre Sensoren selbst generiert. Im Allgemeinen ist die Frequenz $f_s$ des Abfragetaktes einem Sensor aber nicht bekannt, sondern wird von außen durch ein externes System vorgegeben (Slave-Betrieb). In diesem Fall ist das in der DE 10 2013 020 954 beschriebene Verfahren nicht anwendbar.

Die vorliegende Erfindung betrifft das Problem auch für im Slave-Betrieb operierende Sensoren Verfahren zugänglich zu machen, die es ermöglichen, zu einem Auslesezeitpunkt ausgelesenen Daten an die tatsächlich bis zu diesem Zeitpunkt angefallene Bewegung anzupassen. Dieses Problem wird mit dem Gegenstand der unabhängigen Ansprüche gelöst.

Ein Verfahren zum Auslesen von Daten von Inertialsensoren umfasst: Bestimmen einer zeitlichen Folge von Messdaten mittels eines Sensors, wobei die zeitliche Folge von Messdaten durch schrittweise Änderungen der Messdaten zu Einlesezeitpunkten erzeugt wird, die durch eine Einlesefrequenz $f_a$ bestimmt sind und einen zeitlichen Abstand von einer Periodendauer $1/f_a$ der Einlesefrequenz aufweisen; Auslesen von Ausgabedaten aus dem Sensor zu Auslesezeitpunkten, die durch eine Auslesefrequenz $f_s$ bestimmt sind und einen zeitlichen Abstand von einer Periodendauer $1/f_s$ der Auslesefrequenz aufweisen, wobei die Auslesefrequenz $f_s$ kleiner als die Einlesefrequenz $f_a$ ist und die Periodendauer der Auslesefrequenz $1/f_s$ im Allgemeinen kein Vielfaches der Periodendauer der Einlesefrequenz $1/f_a$ ist; Bestimmen des Verhältnisses N zwischen der Einlesefrequenz $f_a$ und der Auslesefrequenz $f_s$ aus der zeitlichen Folge der Anzahlen der zwischen zwei benachbarten Auslesezeitpunkten liegenden Einlesezeitpunkte mittels eines Tiefpassfilters des Sensors. Hierbei werden in dem Sensor die zu den Auslesezeitpunkten auszulesenden Ausgabedaten durch Extrapolation von vor den jeweiligen Auslesezeitpunkten erzeugten Elementen der zeitlichen Folge von Messdaten basierend auf dem Verhältnis N zwischen der Einlesefrequenz $f_a$ und der Auslesefrequenz $f_s$ erzeugt.

Ausgangspunkt des Verfahrens ist also die Situation, dass Daten mit einer Einlesefrequenz erzeugt werden, aber mit einer davon unterschiedlichen, kleineren Auslesefrequenz ausgelesen werden. Der die Daten erzeugende Sensor, insbesondere ein Inertialsensor wie ein Drehraten- oder Beschleunigungssensor, verfügt nur über Kenntnis der Einlesefrequenz, aber keine Kenntnis über die Auslesefrequenz. Diese ist durch externe Vorrichtungen gegeben, die auf den Sensor zugreifen.

Der Sensor ist aber in der Lage, die Datenpfadtakte zu zählen, die zwischen zwei Auslesetakten liegen (hier und im Folgenden soll die Angabe "zwischen" den Zeitpunkten a und b den Zeitpunkt b einschließen, nicht aber den Zeitpunkt a). Für jedes Ausleseintervall der Periodenlänge $1/f_s$ kann der Sensor also die Anzahl der Einlesezeitpunkte bestimmen. Aus der Folge dieser "Einlesezeitpunktanzahlen" kann dann mittels eines Tiefpassfilters auf das Verhältnis N von Einlesefrequenz $f_a$ und Auslesefrequenz $f_s$ geschlossen werden, weil die Einlesezeitpunktanzahlen um den Wert N dieses Verhältnisses oszillieren.

Die Kenntnis der Einlesefrequenz $f_a$ und des Verhältnisses N ist äquivalent zur Kenntnis der beiden Frequenzen

$f_a$ und $f_s$. Der Sensor ist also in der Lage, sich trotz Unkenntnis der Auslesefrequenz $f_s$ alle nötigen Informationen herzuleiten, die dafür notwendig sind, eine Extrapolation der bis zum letzten Einlesezeitpunkt vor einem Auslesezeitpunkt vorhandenen Messdaten auf den Auslesezeitpunkt hin vorzunehmen.

Dadurch wird ermöglicht, dass auch im Slave-Betrieb die zu einem Auslesezeitpunkt ausgelesenen Daten an die tatsächlich bis zu diesem Zeitpunkt angefallene Bewegung angepasst werden können.

Die vorliegende Erfindung soll im Folgenden mit Bezug auf die beigefügten Figuren beispielhaft beschrieben werden. Die vorliegende Erfindung wird aber nicht durch diese beispielhafte Beschreibung definiert, sondern allein durch den Gegenstand der Patentansprüche. Es zeigt:

**Fig. 1**  ein schematisches Diagramm zur Veranschaulichung des integralen und des differentiellen Fehlerkriteriums;

**Fig. 2**  ein schematisches Ablaufdiagram eines Verfahren zur Datenerzeugung und -ausgabe;

**Fig. 3**  eine Simulation einer Schätzung des Verhältnisses von Einlesefrequenz und Auslesefrequenz mittels eines Tiefpassfilters;

**Fig. 4**  eine schematische Darstellung eines Regelkreises zum Regeln des Verhältnisses von Einlesefrequenz und Auslesefrequenz;

**Fig. 5**  eine typische nichtlineare Kennlinie die das Verhältnis von Einlesefrequenz und Auslesefrequenz als Eingang hat; und

**Fig. 6**  eine schematische Darstellung eines Systems mit einem Sensor.

Zur Veranschaulichung und zum besseren Verständnis der vorliegenden Erfindung soll zunächst nochmals auf den in der DE 10 2013 020 954 beschriebenen Fall eingegangen werden, dass einem Inertialsensor sowohl die Einlesefrequenz $f_a$ als auch die Auslesefrequenz $f_s$ bekannt sind. Im Anschluss hieran wird dann die vorliegende Erfindung diskutiert, bei der ein Sensor die Auslesefrequenz nicht selbst vorgibt und damit nicht kennt.

Zunächst sollen nochmals anhand eines einfachen Beispiels die Probleme verdeutlicht werden, die auftreten, wenn Daten des Inertialsensors (oder auch eines äquivalent funktionierenden anderen Sensors wie etwa eines Temperatursensors oder Drucksensors) mit unterschiedlichen Frequenzen ein- und ausgelesen werden.

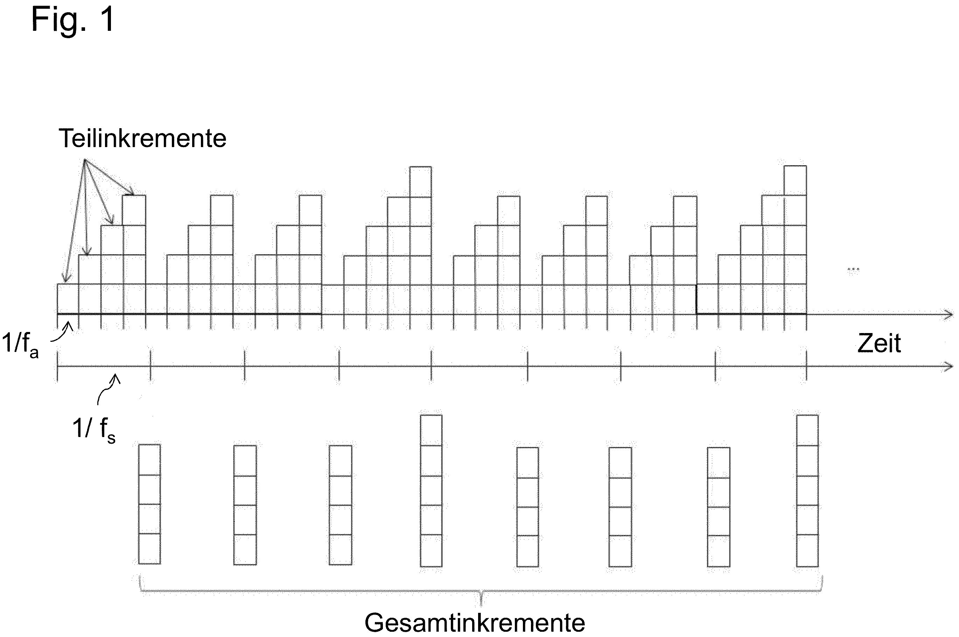

In dem Beispiel wird eine in jedem Datenpfadtakt konstante, schrittweise Änderung der Messdaten angenommen. Der Datenpfadtakt bzw. die Einlesefrequenz soll $f_a$ = 3,4 kHz betragen, der Abfragetakt bzw. die Auslesefrequenz $f_s$ = 800 Hz. Ein Abfragetakt besteht demnach aus N = $f_a/f_s$ = 4,25 Datenpfadtakten. Weil nur über eine ganze Zahl von Datenpfadtakten akkumuliert werden kann, werden dreimal die in 4 Datenpfadtakten akkumulierten Datenänderungen und einmal die in 5 Takte akkumulierten Datenänderungen zu den Auslesezeitpunkten erfasst. Dieses Muster wiederholt sich periodisch, wie in der Fig. 1 gezeigt.

Allgemein gilt für das Verhältnis N = $f_a/f_s$, dass es sich auch schreiben lässt als die Summe einer natürlichen Zahl n und einem vollständig gekürzten Bruch:

$$N = f_a/f_s = n + p/q, \text{ mit n, p, q natürlichen Zahlen und } p < q.$$

Wechsel von n auf (n+1) Einlesezeitpunkte zwischen zwei Auslesezeitpunkten erfolgen dann mit einer Periode von q Auslesetakten. Hierbei treten (q-p) mal n Einlesezeitpunkte auf und p mal (n+1). Die Zahl der Wechsel wird hierbei maximiert.

Die durch den Unterschied von Einlesefrequenz und Auslesefrequenz auftretenden Fehler können in integrale Fehler und differentielle Fehler unterschieden werden.

Mit dem sogenannten integralen Fehlerkriterium wird beurteilt, wie gut die vor den einzelnen Auslesezeitpunkten in den Einlesezeitpunkten akkumulierten Teilinkremente bzw. Messdatenänderungen in den zu den jeweiligen Auslesezeitpunkten ausgegebenen Gesamtinkrementen bzw. Ausgabedaten erfasst werden. Dieses insbesondere in Navigationssystemen wichtige Kriterium ist bei der obigen Methode erfüllt, da jedes Teilinkrement irgendwann auch in einem Gesamtinkrement Berücksichtigung findet.

Das sogenannte differentielle Fehlerkriterium beurteilt hingegen, wie gut ein Gesamtinkrement der Integration über den Abfragetakt entspricht, d.h. wie gut die zu den Auslesezeitpunkten ausgegebenen Messdaten die zu den jeweiligen Auslesezeitpunkten tatsächlich vorhandenen Bewegungen widerspiegeln können. Dieses Kriterium ist aufgrund der Approximation eines Abfragetakts durch eine ganzzahlige Zahl von Akkumulationen nur unzureichend erfüllt. Der ständige Wechsel in der Zahl der Akkumulationen wird im übergeordneten System als zusätzliches Messwerttrau-

schen interpretiert.

Idealerweise sollen die im Laufe der Zeit in den Gesamtinkrementen bzw. Auslesedaten enthaltenen Information derart angepasst werden, dass die zu den Auslesezeitpunkten ausgegebenen Daten, sowohl das differentielle Fehlerkriterium verbessern als auch das integrale Kriterium erfüllen.

Dies kann durch Extrapolation der vor den verschiedenen Auslesezeitpunkten mit dem Datenpfadtakt bereits akkumulierten Messdaten erreicht werden, wenn sowohl die Einlesefrequenz $f_a$ und die Auslesefrequenz $f_s$ bekannt sind. Im Folgenden werden zwei mögliche Beispiele für eine solche Extrapolation diskutiert. Im ersten Beispiel basiert die Extrapolation auf den bis zum aktuellen Auslesezeitpunkt akkumulierten Daten und den bis zum davorliegenden Auslesezeitpunkt akkumulierten Daten (keine Verzögerung). Im zweiten Fall wird zusätzlich eine weitere, zeitlich frühere Datenakkumulation berücksichtigt, wodurch sich die Datenausgabe um einen Auslesetakt verzögert (mit Verzögerung).

Beispiel I: Ohne Verzögerung

In diesem Fall werden die Ausgabedaten nach der folgenden Formel erzeugt, k nummeriert hierbei die Auslesezeitpunkte, d.h. k steigt nach jeder Periode $1/f_s$ des Auslesetakts um eins:

$$v(k) = v_1(k) \cdot \frac{t_{1r}(k)}{t_1(k)} + v_0(k) \cdot \frac{t_A - t_{1r}(k)}{t_0(k)} - v_r(k) = v_1(k) \cdot \frac{f_a \cdot t_{1r}(k)}{n_1(k)} + v_0(k) \cdot \frac{N - f_a \cdot t_{1r}(k)}{n_0(k)} - v_r(k),$$

wobei gilt

$$t_A = 1/f_s; \ t_0(k) = n_0(k)/f_a; \ t_1(k) = n_1(k)/f_a; \ N = f_a/f_s;$$

Anfangsbedingungen:

$$n_0(0) = n_1(0) = N; \ t_{1r}(0) = v_1(0) = v_r(0) = 0;$$

Zustandsübergänge:

$$n_1(k+1) = n_0(k); \ v_1(k+1) = v_0(k).$$

Die Iteration der Größen $v_r(k)$ und $t_{r1}(k)$ richtet sich nach der folgenden Fallunterscheidung:

Fall 1: für

$$N > f_a \cdot t_{1r}(k) + n_0(k):$$

$$v_r(k+1) = v_0(k)/n_0(k) \cdot (N - f_a \cdot t_{1r}(k) - n_0(k));$$

und

$$t_{1r}(k+1) = 0.$$

Fall 2: für

$$N \le f_a \cdot t_{1r}(k) + n_0(k):$$

$$v_r(k+1) = 0;$$

und

$$t_{1r}(k+1) = 1/f_a \cdot (n_0(k) + f_a \cdot t_{1r}(k) - N).$$

Hierbei entspricht:

- $v(k)$ den Ausgabedaten, die im k-ten Auslesezeitpunkt ausgelesen werden
- $n_0(k)$ der Anzahl zwischen dem (k-1)-ten Auslesezeitpunkt und dem k-ten Auslesezeitpunkt gelegenen Einlesezeitpunkte und $t_0(k)$ dem zugehörigen Zeitintervall
- $n_1(k)$ der Anzahl zwischen dem (k-2)-ten Auslesezeitpunkt und dem (k-1)-ten Auslesezeitpunkt gelegenen Einlesezeitpunkte und $t_1(k)$ dem zugehörigen Zeitintervall
- $v_0(k)$ der Summe von schrittweisen Änderungen der Bewegungsdaten, die zu den Einlesezeitpunkten erfolgt sind, die zwischen dem (k-1)-ten Auslesezeitpunkt und dem k-ten Auslesezeitpunkt lagen
- $v_1(k)$ der Summe von schrittweisen Änderungen der Bewegungsdaten, die zu den Einlesezeitpunkten erfolgt sind, die zwischen dem (k-2)-ten Auslesezeitpunkt und dem (k-1)-ten Auslesezeitpunkt lagen
- $t_{1r}$ einem Zeitintervall
- $v_r$ einem Restterm.

Beispiel II: Mit Verzögerung

In diesem Beispiel unterscheidet sich die für die Ausgabedaten zu verwendende Formel nach zwei Fällen:

Fall 1:

$$N > f_a \cdot (t_{2r}(k) + t_{1r}(k)):$$

$$v(k) = v_2(k) \cdot \frac{t_{2r}(k)}{t_2(k)} + v_1(k) \cdot \frac{t_{1r}(k)}{t_1(k)} + v_0(k) \cdot \frac{t_A - t_{1r}(k) - t_{2r}(k)}{t_0(k)} = v_2(k) \cdot \frac{f_a \cdot t_{2r}(k)}{n_2(k)} + v_1(k) \cdot \frac{f_a \cdot t_{1r}(k)}{n_1(k)} + v_0(k) \cdot \frac{N - f_a \cdot (t_{1r}(k) + t_{2r}(k))}{n_0(k)}.$$

$$t_{1r}(k+1) = 1/f_a (n_0(k) - N + f_a \cdot (t_{2r}(k) + t_{1r}(k))).$$

$$t_{2r}(k+1) = 0;$$

Fall 2:

$$N \le f_a \cdot (t_{2r}(k) + t_{1r}(k)):$$

$$v(k) = v_2(k) \cdot \frac{t_{2r}(k)}{t_2(k)} + v_1(k) \cdot \frac{t_A - t_{2r}(k)}{t_1(k)} = v_2(k) \cdot \frac{f_a \cdot t_{2r}(k)}{n_2(k)} + v_1(k) \cdot \frac{N - f_a \cdot t_{2r}(k)}{n_1(k)}.$$

$$t_{1r}(k+1) = n_0(k)/f_a;$$

$$t_{2r}(k+1) = t_{2r}(k) + t_{1r}(k) - N/f_a.$$

wobei gilt

$$t_A = 1/f_s; \quad t_0(k) = n_0(k)/f_a; \quad t_1(k) = n_1(k)/f_a; \quad t_2(k) = n_2(k)/f_a; \quad N = f_a/f_s;$$

Anfangsbedingungen:

$$n_0(0) = n_1(0) = n_2(0) = N; \quad t_{1r}(0) = 1/f_s; \quad t_{2r}(0) = 0; \quad v_1(0) = v_2(0) = 0;$$

Zustandsübergänge:

$$n_1(k+1) = n_0(k); \quad n_2(k+1) = n_1(k); \quad v_1(k+1) = v_0(k); \quad v_2(k+1) = v_1(k).$$

Beiden Beispielen I und II gemeinsame Symbole behalten ihre bereits in Beispiel I beschriebene Bedeutung. Analog gilt für die in Beispiel II neu hinzugekommenen Symbole:

- $n_2(k)$ der Anzahl zwischen dem (k-3)-ten Auslesezeitpunkt und dem (k-2)-ten Auslesezeitpunkt gelegenen Einlesezeitpunkte und $t_2(k)$ dem zugehörigen Zeitintervall
- $v_2(k)$ der Summe von schrittweisen Änderungen der Bewegungsdaten, die zu den Einlesezeitpunkten erfolgt sind, die zwischen dem (k-3)-ten Auslesezeitpunkt und dem (k-2)-ten Auslesezeitpunkt lagen;
- $t_{2r}$ einem Zeitintervall.

In beiden Beispielen I und II ist die Erhaltung des integralen Fehlerkriterium bei der Verwendung obiger Formel garantiert, da sämtliche eingelesenen Daten im Laufe der Datenausgabe berücksichtigt werden. Dies kann in Beispiel I durch Betrachtung der Größe

$$v_{error}(k) = \sum_{i=0}^{k} \big( v_0(i) - v(i) \big)$$

und in Beispiel II durch Betrachtung der Größe

$$v_{error}(k) = \sum_{i=0}^{k} \big( v_0(i) - v(i+1) \big)$$

verifiziert werden, die die akkumulierte Differenz zwischen Filtereingang und Filterausgang des Inertialsensors wiedergibt. Für die Erfüllung des integralen Fehlerkriteriums darf sich auch über beliebig große Zeiträume keine Drift des Wertes $v_{error}$ in positiver oder negativer Richtung einstellen, er muss sich vielmehr immer um einen Gleichanteil herum bewegen. Dass dies für die obige Formel der Fall ist, kann leicht durch entsprechende Simulationen gezeigt werden.

Zudem lässt sich durch Simulation ebenfalls leicht zeigen, dass sich die Ausgabedaten sehr rasch auf einen Wert einstellen, mit dem auch das differentielle Fehlerkriterium erfüllt ist. Legt man z.B. N=4,25 zugrunde und rechnet mit einer konstanten Änderung der Bewegungsdaten um 1, dann gilt für no(k)=4: $v_0(k)$=4, und für no(k)=5: $v_0(k)$=5. Zudem gilt nach den oben gemachten Überlegungen $n_O(4i+1)=n_O(4i+2)=n_O(4i+3)$=4; $n_O(4i+4)$=5 (i aus den natürlichen Zahlen mit Null). Bei Verwendung der obigen Formel stellt man fest, dass sich v(k) rasch auf 4,25 einstellt, d.h. dass das differentielle Fehlerkriterium erfüllt ist. Ähnliche Ergebnisse lassen sich auch für komplexere Beispiele simulieren.

Aus den obigen Beispielen geht offensichtlich hervor, dass für die Extrapolation der mit dem Datenpfadtakt eingelesenen Messdatenänderungen bzw. -inkrementen die Einlesefrequenz $f_a$ und die Auslesefrequenz $f_s$ bzw. das Verhältnis N dieser beiden Größen bekannt sein muss. Dies trifft nicht nur auf die oben explizit diskutierten Beispiele zu, sondern generell, da es ohne Kenntnis über die zeitliche Lage der Auslesezeitpunkte nicht möglich ist, die Ausgabedaten durch Extrapolation auf diese Auslesezeitpunkte aus den eingelesenen Daten zu erzeugen.

Die vorliegende Erfindung bezieht sich deshalb auf das Problem wie das Verhältnis N bestimmt werden kann, um auch im Slave-Betrieb beide Fehlerkriterien erfüllen zu können. Obwohl die nachfolgende Beschreibung der Erfindung auf die oben erläuterten Beispiele für eine Datenextrapolation Bezug nimmt, ist die Erfindung auch auf jedes andere, beliebige Extrapolationsverfahren anwendbar, das auf dem Verhältnis N von Einlesefrequenz und Auslesefrequenz basiert.

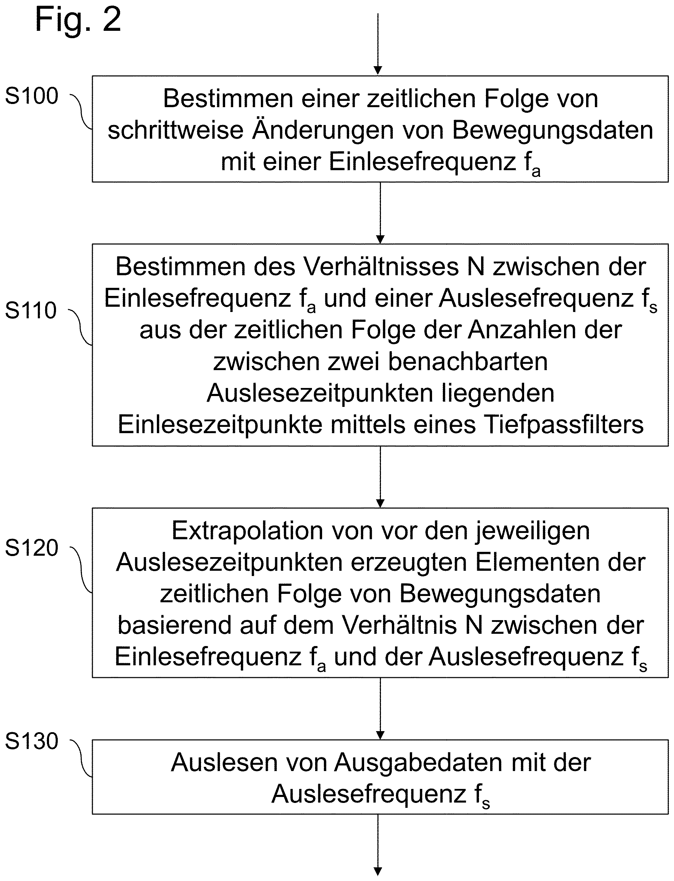

Ein schematisches Ablaufdiagram für ein Verfahren zum Auslesen von Daten eines Inertialsensors ist in der Fig. 2 gezeigt. Obwohl im Folgenden auf Inertialsensoren abgestellt wird, versteht es sich von selbst, dass das Verfahren auch auf jeden anderen Sensortyp anwendbar ist, der schrittweise Datenwerte ausgibt, die Änderungen an einer bestimmten Messgröße darstellen.

Bei S100 wird eine zeitliche Folge von numerischen Messwerten bestimmt. Die aufeinanderfolgenden Folgeglieder unterscheiden sich hierbei um bestimmte Zahlenwerte, d.h. die Messwerte ändern sich schrittweise bzw. inkrementell. Die einzelnen Änderungen können deshalb auch als Teilinkremente bezeichnet werden. Dies ist typischerweise der Fall bei durch Inertialsensoren aufgenommenen Messwerten, diese stellen dann z.B. Winkelinkremente oder Geschwindigkeitsinkremente dar. Es ist aber auch denkbar, andere Sensoren auf diese Weise zu betreiben, z.B. Temperatur- oder Drucksensoren, die nur die Änderung ihrer Messgrö-βe, aber keinen Absolutwert bestimmen. Die Bestimmung der Folge von Messwerten bringt notwendigerweise auch die Bestimmung der einzelnen Änderungen, d.h. der Teilinkremente, mit sich.

Wie oben bereits erläutert, werden die Teilinkremente mit einem Datenpfadtakt bzw. einer Einlesefrequenz $f_a$ erzeugt. Das heißt, dass nach jeder Periodendauer $1/f_a$ der Einlesefrequenz ein Einlesezeitpunkt erreicht ist, bei dem die Datenfolge fortgeschrieben wird, d.h. ein Teilinkrement erzeugt wird.

Die Messdaten sollen schlussendlich mit einer Auslesefrequenz $f_s$ ausgelesen werden. Die Auslesefrequenz $f_s$ ist dem Sensor, der die Messwerte bzw. Teilinkremente erzeugt, nicht bekannt. Vielmehr wird die Auslesefrequenz $f_s$ durch eine externe Vorrichtung, wie etwa den Prozessor einer Navigationsplattform, vorgegeben. Wie oben beschrieben, ist die Auslesefrequenz $f_s$ kleiner als die Einlesefrequenz $f_a$ und die beiden Frequenzen sind im Allgemeinen keine Vielfachen voneinander. Das heißt, dass Einlesezeitpunkte und Auslesezeitpunkte zumeist auseinanderfallen.

Um die Auslesefrequenz $f_s$ zu bestimmen, wird bei S110 eine zeitliche Folge der Anzahl des Auftretens von Einlesezeitpunkten zwischen zwei Auslesezeitpunkten bestimmt. Es wird also für jeden Auslesetakt bestimmt, wie viele Teilinkremente während des Auslesetaktes gebildet wurden. Mit dem Ende des Auslesetaktes gleichzeitig auftretende Einlesezeitpunkte werden dabei dem endenden Auslesetakt zugerechnet.

Die Anzahl der Einlesezeitpunkte kann von dem Sensor dabei leicht bestimmt werden, z.B. durch einen Zähler, der mit jedem Auslesezeitpunkt wieder auf null gesetzt wird.

Wie oben erläutert, schwankt die Anzahl der Einlesezeitpunkte um den Wert N des Verhältnisses von Einlesefrequenz $f_a$ und Auslesefrequenz $f_s$. Diese Anzahl kann also als Eingang für einen Tiefpassfilter verwendet werden, mit dem eine Schätzung für das Verhältnis N bestimmt werden kann.

Im einfachsten Fall besteht der Tiefpassfilter daraus, einen Mittelwert über eine vorgegebene Menge von Einlesezeitpunktsanzahlen zu bilden. Zum Beispiel kann immer das arithmetische Mittel über die letzten K Einlesezeitpunktsanzahlen bestimmt werden, wobei K eine natürliche Zahl ist, z.B. 5, 10, 50, 100, 500, 1000 oder mehr.

Vorzugsweise soll der Tiefpassfilter aber möglichst schnell eine möglichst genaue Schätzung für das Verhältnis N abgeben. Zudem soll das Filterergebnis im eingeschwungenen Zustand möglichst konstant sein, d.h. eine möglichst geringe Restwelligkeit aufweisen.

Um dies zu erreichen, ist es vorteilhaft, einen Filteralgorithmus zu verwenden, dessen Zeitkonstante zunächst klein ist, der also zu Beginn der Filterung zu einer raschen Konvergenz auf den schlussendlich resultierenden Schätzwert für N führt. Um jedoch ein "Übersteuern" der Schätzung zu unterbinden, d.h. um das Ergebnis der Filterung möglichst konstant zu halten, wird die Zeitkonstante sukzessive bis zu einem vorgegebenen Maximalwert erhöht.

Prinzipiell sind verschiedene Möglichkeiten für die Realisierung eines derartigen Tiefpassfilters vorstellbar. Eine davon soll im Folgenden beispielhaft näher erläutert werden.

Hierzu wird als Schätzwert N(k) für das Verhältnis N von Einlesefrequenz $f_a$ und Auslesefrequenz $f_s$ in einer Folge von mit k nummerierten Auslesetakten der folgende Wert verwendet:

$$N(k) = (1 - 2^{-q(k)}) \cdot N(k-1) + 2^{-q(k)} \cdot n(k).$$

n(k) stellt hierbei die Anzahl der im k-ten Auslesetakt aufgetretenen Einlesezeitpunkte dar und q(k) ist eine natürliche Zahl, die mit steigenden k anwächst. Als Anfangsbedingung wird N(0)=n(0) gewählt.

Die zugehörige z-Übertragungsfunktion Gf(z) eines derartigen Tiefpassfilters lautet:

$$G_f(z) = \frac{2^{-q} \cdot z}{z - (1 - 2^{-q})}, \qquad q \in \mathbb{N}$$

Die auf die Filterschrittweite bzw. die Periodendauer des Auslesetaktes $t_A = 1/f_s$ normierte Zeitkonstante $\tau$ dieses Tiefpasses erster Ordnung beträgt:

$$\frac{\tau}{t_A} = \frac{1}{ln(1 - 2^{-q})}$$

Unter Zugrundelegung einer Einschwingzeit von $3 \cdot \tau$ und Benutzung der Näherung $ln(1-x) \approx -x$ ergibt sich, dass dieses Filter nach etwa $3/2^{-q}$ Takten eingeschwungen ist.

Die Filterung kann nun mit kleinem q gestartet werden, z.B. mit q=1. Nach Abwarten der Einschwingzeit (z.B. $3/2^{-1}$ = 6 Takte) wird die Zeitkonstante erhöht und wiederum abgewartet, bis die Filterung eingeschwungen ist. Zum Beispiel verdoppelt sich durch Setzen von q=2 die Einschwingzeit in etwa. In diesem Rhythmus werden die Zeitkonstante und die zugehörige Einschwingzeit von Schritt zu Schritt immer wieder vergrößert, bis ein gewünschter Endwert $q_{MAX}$ erreicht ist, z.B. kann $q_{MAX}$ 8, 10 oder mehr betragen.

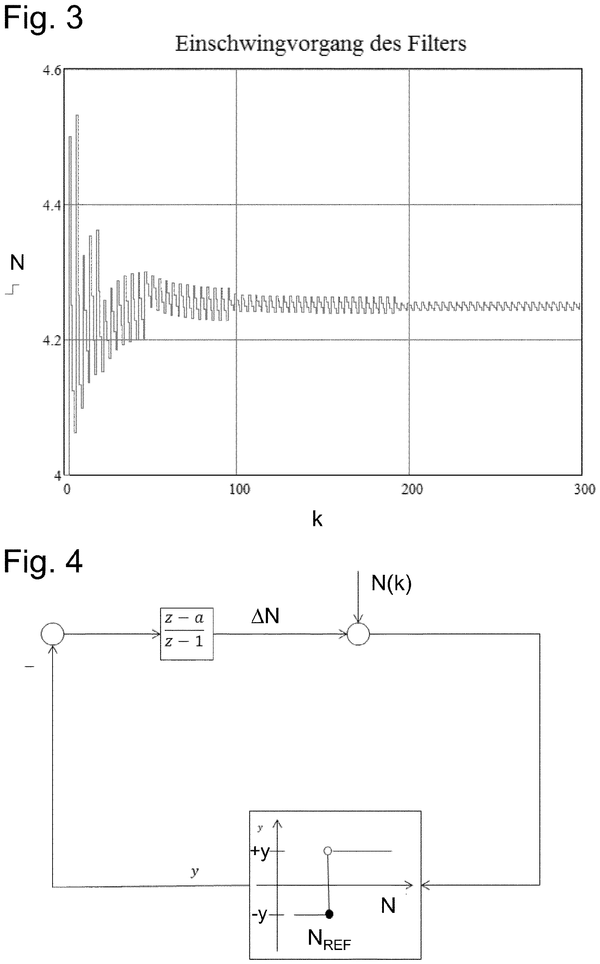

Die Fig. 3 zeigt den Beginn des Einschwingvorgangs des oben Beschriebenen Filters für eine Abfolge der Zahl der Datenpfadtakte von N=4,4,4,5,4,4,4,5,4,4,4,5,... in den ersten 300 Takten. Wie man sieht konvergiert der Wert N(k) rasch auf N=4,25. Durch die Änderung von q wird jedoch verhindert, dass es große Schwankungen um diesen Wert gibt.

Die auf diese Weise gewonnene Schätzung für das Verhältnis aus Einlesefrequenz $f_a$ und Auslesefrequenz $f_s$ kann dann bei S120 für die Extrapolation der eingelesenen Messdaten bzw. Teilinkremente auf die Auslesezeitpunkte hin verwendet werden. Bei S130 werden die extrapolierten Ausgabedaten mit der Auslesefrequenz $f_s$ durch eine externe Vorrichtung abgefragt und ausgelesen.

Die direkte Verwendung dieser Schätzung N für das Verhältnis aus Einlesefrequenz $f_a$ und Auslesefrequenz $f_s$ in den Algorithmen von Beispiel I oder Beispiel II ist aber problematisch. Es ist nämlich durchaus möglich, dass die durch die Tiefpassfilterung ermittelte Schätzung für N nicht exakt mit dem tatsächlichen Frequenzverhältnis übereinstimmt, das im Folgenden mit $N_{REF}$ bezeichnet werden soll. Insbesondere eine dauerhaft zu niedrige Schätzung $N < N_{REF}$ ist problematisch, wie die folgenden Betrachtungen aufzeigen:

In den untenstehenden Tabellen ist die Zahl der "Fall 1"-Fälle für eine $n_O(k)$-Folge von: no = 4, 4, 4, 5, 4, 4, 4, 5, 4, 4,4, 5, etc. und der Annahme eines gegenüber NREF=4.25 zu kleinen Schätzwerts von N=4,2 dargestellt (Tabelle 1 für Beispiel I, Tabelle 2 für Beispiel II). Wie oben bereits erläutert tritt im Beispiel I ein "Fall 1"-Fall auf, wenn gilt $N > f_a \cdot t_{1r}(k) + n_O(k)$, im Beispiel II, wenn gilt $N > f_a \cdot (t_{2r}(k) + t_{1r}(k))$.

| Tabelle 1: Berechnung von "Fall 1"-Fällen für Beispiel I | | | |
|---|---|---|---|
| $k$ | $n_0(k)$ | $f_a t_{1r}(k) + n_0(k)$ | $t_{1r}(k + 1)$ |
| 0 | 4 | $0 + 4 < 4.2 \to$ Fall 1 | 0 |
| 1 | 4 | $0 + 4 < 4.2 \to$ Fall 1 | 0 |
| 2 | 4 | $0 + 4 < 4.2 \to$ Fall 1 | 0 |
| 3 | 5 | $0 + 5 \geq 4.2 \to$ Fall 2 | $5 + 0 - 4.2 = 0.8$ |
| 4 | 4 | $0.8 + 4 \geq 4.2 \to$ Fall 2 | $4 + 0.8 - 4.2 = 0.6$ |
| 5 | 4 | $0.6 + 4 \geq 4.2 \to$ Fall 2 | $4 + 0.6 - 4.2 = 0.4$ |
| 6 | 4 | $0.4 + 4 \geq 4.2 \to$ Fall 2 | $4 + 0.4 - 4.2 = 0.2$ |
| 7 | 5 | $0.2 + 5 \geq 4.2 \to$ Fall 2 | $5 + 0.2 - 4.2 = 1.0$ |
| 8 | 4 | $1.0 + 4 \geq 4.2 \to$ Fall 2 | $4 + 1.0 - 4.2 = 0.8$ |
| 9 | 4 | $0.8 + 4 \geq 4.2 \to$ Fall 2 | $4 + 0.8 - 4.2 = 0.6$ |
| 10 | 4 | $0.6 + 4 \geq 4.2 \to$ Fall 2 | $4 + 0.6 - 4.2 = 0.4$ |
| 11 | 5 | $0.4 + 5 \geq 4.2 \to$ Fall 2 | $5 + 0.4 - 4.2 = 1.2$ |

| Tabelle 2: Berechnung von "Fall 1"-Fällen für Beispiel II | | | | |
|---|---|---|---|---|
| $k$ | $n_0(k)$ | $t_{2r}(k) + t_{1r}(k) \mid$ | $t_{2r}(k + 1)$ | $t_{1r}(k + 1)$ |
| 0 | 4 | $0 + 4.2 \geq 4.2$ -t Fall 2 | $4.2 + 0 - 4.2 = 0$ | 4 |
| 1 | 4 | $0 + 4 < 4.2 \to$ Fall 1 | 0 | $4 - (4.2 - 0 - 4) = 3.8$ |
| 2 | 4 | $0 + 3.8 < 4.2$ -t Fall 1 | 0 | $4 - (4.2 - 0 - 3.8) = 3.6$ |

(fortgesetzt)

| Tabelle 2: Berechnung von "Fall 1"-Fällen für Beispiel II | | | | |
|---|---|---|---|---|
| $k$ | $n_0(k)$ | $t_{2r}(k) + t_{1r}(k)\,|$ | $t_{2r}(k+1)$ | $t_{1r}(k+1)$ |
| 3 | 5 | $0 + 3.6 < 4.2 \rightarrow$ Fall 1 | 0 | $5 - (4.2 - 0 - 3.6) = 4.4$ |
| 4 | 4 | $0 + 4.4 \geq 4.2 \rightarrow$ Fall 2 | $4.4 + 0 - 4.2 = 0.2$ | 4 |
| 5 | 4 | $0.2 + 4 \geq 4.2 \rightarrow$ Fall 2 | $4 + 0.2 - 4.2 = 0$ | 4 |
| 6 | 4 | $0 + 4 < 4.2 \rightarrow$ Fall 1 | 0 | $4 - (4.2 - 0 - 4) = 3.8$ |
| 7 | 5 | $0 + 3.8 < 4.2 \rightarrow$ Fall 1 | 0 | $5 - (4.2 - 0 - 3.8) = 4.6$ |
| 8 | 4 | $0 + 4.6 \geq 4.2 \rightarrow$ Fall 2 | $4.6 + 0 - 4.2 = 0.4$ | 4 |
| 9 | 4 | $0.4 + 4 \geq 4.2 \rightarrow$ Fall 2 | $4 + 0.4 - 4.2 = 0.2$ | 4 |
| 10 | 4 | $0.2 + 4 \geq 4.2 \rightarrow$ Fall 2 | $4 + 0.2 - 4.2 = 0$ | 4 |
| 11 | 5 | $0 + 4 < 4.2 \rightarrow$ Fall 1 | 0 | $5 - (4.2 - 0 - 4) = 4.8$ |
| 12 | 4 | $0 + 4.8 \geq 4.2 \rightarrow$ Fall 2 | $4.8 + 0 - 4.2 = 0.6$ | 4 |
| 13 | 4 | $0.6 + 4 \geq 4.2 \rightarrow$ Fall 2 | $4 + 0.6 - 4.2 = 0.4$ | 4 |
| 14 | 4 | $0.4 + 4 \geq 4.2 \rightarrow$ Fall 2 | $4 + 0.4 - 4.2 = 0.2$ | 4 |
| 15 | 5 | $0.2 + 4 \geq 4.2 \rightarrow$ Fall 2 | $4 + 0.2 - 4.2 = 0$ | 5 |
| 16 | 4 | $0 + 5 \geq 4.2 \rightarrow$ Fall 2 | $5 + 0 - 4.2 = 0.8$ | 4 |
| 17 | 4 | $0.8 + 4 \geq 4.2 \rightarrow$ Fall 2 | $4 + 0.8 - 4.2 = 0.6$ | 4 |
| 18 | 4 | $0.6 + 4 \geq 4.2 \rightarrow$ Fall 2 | $4 + 0.6 - 4.2 = 0.4$ | 4 |
| 19 | 5 | $0.4 + 4 \geq 4.2 \rightarrow$ Fall 2 | $4 + 0.4 - 4.2 = 0.2$ | 5 |
| 20 | 4 | $0.2 + 5 \geq 4.2 \rightarrow$ Fall 2 | $5 + 0.2 - 4.2 = 1.0$ | 4 |
| 21 | 4 | $1.0 + 4 \geq 4.2 \rightarrow$ Fall 2 | $4 + 1.0 - 4.2 = 0.8$ | 4 |
| 22 | 4 | $0.8 + 4 \geq 4.2 \rightarrow$ Fall 2 | $4 + 0.8 - 4.2 = 0.6$ | 4 |
| 23 | 5 | $0.6 + 4 \geq 4.2 \rightarrow$ Fall 2 | $4 + 0.6 - 4.2 = 0.4$ | 5 |

Wie man in den Tabellen erkennt, treten bei $N < N_{REF}$ nach einiger Zeit gar keine "Fall-1"-Fälle, sondern nur noch "Fall-2"-Fälle auf. Damit verbunden wächst in Beispiel I der noch nicht verarbeitete Restanteil $t_{1r}(k+1)$ und in Beispiel II der noch nicht verarbeitete Restanteil $t_{2r}(k+1)$ aufgrund der fehlenden bereinigenden "Fall-1"-Fälle tendenziell immer weiter an. Dieser Effekt führt ohne korrigierenden Eingriff zu einer Divergenz des Filterergebnisses $v(k)$.

Zur Vermeidung des oben beschriebenen Divergenzproblems kann eine Regelung des mittels Tiefpassfilterung generierten Schätzwerts $N$ auf das unbekannte, korrekte $N_{REF}$ implementiert werden. Die Regelung soll den für die Extrapolation verwendeten Wert von $N$ dabei möglichst nahe an $N_{REF}$ heranführen. Dann wird bei S120 der in der Regelung erzielte Wert von $N$ für die Extrapolation verwendet.

Ein Beispiel für einen entsprechenden Regelkreis ist in der Fig. 4 gezeigt. Als Eingang für den Regelkreis dient ein für das Verhältnis $N$ angenommener Referenzwert, beispielsweise der durch die oben diskutierte Tiefpassfilterung gelieferte Schätzwert $N(k)$.

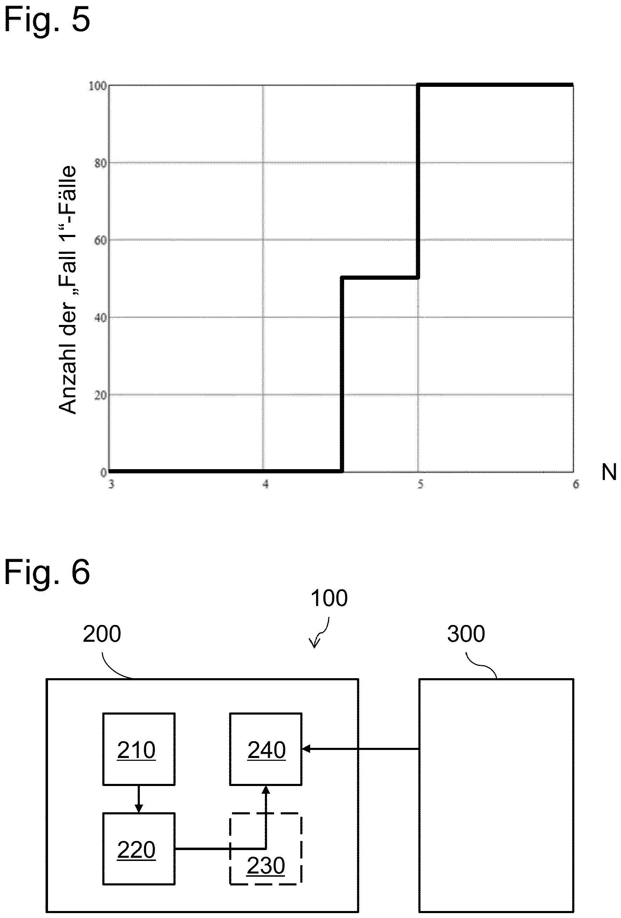

Das stationäre Modell der Regelstrecke lässt sich durch eine Sprungfunktion bzw. nichtlineare Kennlinie beschreiben, wie sie z. B. in Fig. 5 gezeigt ist.

Diese Kennlinie beschreibt die Abhängigkeit der Zahl der in den obigen Beispielen I und II eingeführten "Fall 1"-Fälle in K Zeitschritten $k_{i+1}$ bis $k_{i+K}$ (i, K natürliche Zahlen) vom angenommenen Frequenzverhältnis $N$. Die Kennlinie beschreibt also die Anzahl der auftretenden "Fall 1 "-Fälle pro Zeiteinheit in Abhängigkeit vom Frequenzverhältnis $N$.

Das Aussehen dieser Kennlinie ist abhängig von der absoluten Lage von $N_{REF}$ im Intervall $[N_{REF}]$ bis $[N_{REF}]$ +1 ([x]=ganzzahliger Anteil von x). Die Kennlinie in Fig. 5 ist deshalb nur als beispielhaft anzusehen. Charakteristisch ist aber allen Kennlinien, dass für $N<N_{REF}$ gar keine "Fall 1"-Fälle auftreten und diese dann im Intervall von $N_{REF}$ bis $[N_{REF}]$+1 sprunghaft ansteigen, bis nur noch "Fall 1"-Fälle auftreten. Dieses Springen der Kennlinie bei $N=N_{REF}$ wird deshalb als Kriterium für die Regelung von $N$ auf $N_{REF}$ wie folgt ausgenützt:

Liefert die Kennlinie den Wert 0 für die Anzahl der "Fall 1"-Fälle pro Zeiteinheit, so ist $N$ zu klein ($N< N_{REF}$). In diesem Fall wird dem Regler ein Wert -y (y>0) zugeführt, welcher nach der im Regelkreis vorkommenden Negation zu einer Erhöhung des Schätzwertes N(k) um einen Korrekturwert ΔN führt. Das um ΔN korrigierte N wird also näher an $N_{REF}$ herangeführt.

Liefert die Kennlinie hingegen einen Wert größer 0 für die Anzahl der "Fall 1"-Fälle pro Zeiteinheit, so ist N zu groß (N > $N_{REF}$). In diesem Fall wird dem Regler ein Wert +y zugeführt, welcher nach der im Regelkreis vorkommenden Negation zu einer Erniedrigung des Schätzwertes N(k) um einen Korrekturwert ΔN führt. Das um ΔN korrigierte N wird also näher an $N_{REF}$ herangeführt.

Die Kennlinie muss hierzu nicht zwingend berechnet oder erzeugt werden. Das wesentliche Merkmal der Kennlinie ist das sprungförmige Verhalten bei N=$N_{REF}$. Für N<$N_{REF}$ ist die Kennlinie 0. Ab N>$N_{REF}$ steigt sie sprungförmig auf den Maximalwert an. Je nach Beschaffenheit der eingehenden Zahlenfolge $n_0(k)$ kann die Kennlinie entweder in einem einzigen Sprung oder in mehreren Teilsprüngen den Maximalwert erreichen. Ob der Maximalwert in einem einzigen Sprung oder in mehreren Teilsprüngen erreicht wird, ist aber nicht entscheidend. Die entscheidende Eigenschaft der Kennlinie ist der Sprung oder Teilsprung bei N=$N_{REF}$. Diese zentrale Eigenschaft wird für die Regelung ausgenutzt.

Hierzu muss die Kennlinie nicht zwingend erzeugt werden, da sie eine mathematische Beschreibung für das Verhalten der Regelstrecke (Streckenmodell) ist. Die Zahl der "Fall 1"-Fälle pro Zeiteinheit, kann z.B. über einen Zähler gemessen werden. Hieraus kann der Regler direkt ableiten, wie er N an $N_{REF}$ heranführen soll.

Aufgrund der Tatsache, dass bei N=$N_{REF}$ in jedem Fall ein "Fall 1"-Fall auftreten muss, ist es nämlich ausreichend, das Auftreten dieser Fälle zu überwachen. Beim ersten Auftreten kann der Regler bereits den Wert +y verwenden. Bleiben nach einem "Fall 1"-Fall bei einem Zeitfenster vor K Zeitschritten für die Auswertung der Folge $n_0(k)$ in den nächsten K Zeitschritten "Fall 1"-Fälle aus, so geht der Regler zurück auf den Wert -y.

Der Regler selbst wird vorzugsweise über ein I- oder ein PI-Glied (Parameter a in Fig. 4 gleich null bzw. ungleich null) realisiert.

Ein Wert von N=$N_{REF}$ wird hierbei nicht dauerhaft erreicht, sondern es wird sich, wie für derartige nichtlineare Regelkreise üblich, eine Dauerschwingung um N=$N_{REF}$ herum einstellen. Die Amplitude dieser Dauerschwingung kann durch den Betrag von y eingestellt werden. Der dynamische Anteil des Streckenmodells, den es in den beschriebenen Systemen ebenfalls gibt, wurde in der obigen Beschreibung vernachlässigt. Es wurde lediglich die nichtlineare Kennlinie im stationären Zustand berücksichtigt. Der dynamische Anteil kann bei der Wahl der Reglerparameter mitberücksichtigt werden.

Die Verwendung eines Regelkreises, in dem das stationäre Streckenmodell durch eine nichtlineare Kennlinie bzw. Sprungfunktion in N gegeben ist, die bei N=$N_{REF}$ springt, ermöglicht es also, das für die Extrapolation der eingelesenen Daten verwendete und mittels des Tiefpassfilters abgeschätzte Verhältnis N dem wahren Verhältnis von Einlesefrequenz $f_a$ und Auslesefrequenz $f_s$ anzupassen, wodurch das oben beschriebene Divergenzproblem vermieden werden kann.

Es ist also bei Verwendung einer Kombination eines oben beschriebenen Tiefpassfilters zum Auffinden einer ersten Schätzung von N, eines Regelkreises zum Regeln dieser Schätzung N auf den Referenzwert $N_{REF}$, sowie eines Filters zum Extrapolieren der eingelesenen Messdaten möglich, ohne Kenntnis der Auslesefrequenz $f_s$ Messdaten zu jedem Auslesezeitpunkt bereit zu stellen, die sowohl das differentielle also auch das integrale Fehlerkriterium erfüllen. Zudem können alle hierzu notwendigen Parameter aus den von dem entsprechend ausgestatteten Sensor bestimmten Messdaten abgeleitet werden.

Die Fig. 6 zeigt schematisch eine Darstellung eines Systems 100 zur Verwirklichung des oben beschriebenen Verfahrens.

Das System 100 weist einen Sensor 200, z.B. einen Inertialsensor, zum Bestimmen einer zeitlichen Folge von Messdaten, z.B. Bewegungsdaten, mit der Einlesefrequenz $f_a$ auf. Die Messdaten werden von einer Sensorvorrichtung 210, etwa einem Kreiselsensor oder einem Beschleunigungssensor aufgenommen. Von dort werden die Messdaten über einen Tiefpassfilter 220 und optional über einen Regelkreis 230 an ein Filter 240 gegeben, das die oben beschriebene Extrapolation der eingelesenen Daten vornimmt. Tiefpassfilter 220, Regelkreis 230 und Filter 240 können hierbei als Hardware oder Software ausgebildet sein und entweder als eine einzige Komponente (z.B. ein einzelner Prozessor) oder als separate Einheiten ausgebildet sein.

Das System 100 weist zudem eine Auswerteeinheit 300 auf, die die im Filter 240 extrapolierten Messdaten als Ausgabedaten mit der Auslesefrequenz $f_s$ abfragt und weiter verarbeitet, z.B. um eine Navigationslösung bereitzustellen.

Mit einem derartigen Sensor 200 und einer derartigen Auswerteeinheit 300 lassen sich die oben beschriebenen Vorteile erzielen. Es können Ausgabedaten erzeugt werden, die in guter Näherung den zum Auslesezeitpunkt vorhandenen Zustand des vermessenen Systems wiedergeben, obwohl Auslesezeitpunkte und Datenaufnahmezeitpunkte verschieden sind. Damit erfüllen die Ausgabedaten sowohl das integrale als auch das differentielle Fehlerkriterium.

**Patentansprüche**

1. Verfahren zum Auslesen von Daten von Sensoren (200), umfassend:

Bestimmen einer zeitlichen Folge von Messdaten mittels eines Sensors (200), wobei die zeitliche Folge von Messdaten durch schrittweise Änderungen der Messdaten zu Einlesezeitpunkten erzeugt wird, die durch eine Einlesefrequenz $f_a$ bestimmt sind und einen zeitlichen Abstand von einer Periodendauer $1/f_a$ der Einlesefrequenz aufweisen;

Auslesen von Ausgabedaten aus dem Sensor (200) zu Auslesezeitpunkten, die durch eine Auslesefrequenz $f_s$ bestimmt sind und einen zeitlichen Abstand von einer Periodendauer $1/f_s$ der Auslesefrequenz aufweisen, wobei die Auslesefrequenz $f_s$ kleiner als die Einlesefrequenz $f_a$ ist;

Bestimmen des Verhältnisses N zwischen der Einlesefrequenz $f_a$ und der Auslesefrequenz $f_s$ aus der zeitlichen Folge der Anzahlen der zwischen zwei benachbarten Auslesezeitpunkten liegenden Einlesezeitpunkte mittels eines Tiefpassfilters (220) des Sensors (200); wobei

in dem Sensor (200) die zu den Auslesezeitpunkten auszulesenden Ausgabedaten durch Extrapolation von vor den jeweiligen Auslesezeitpunkten erzeugten Elementen der zeitlichen Folge von Messdaten basierend auf dem Verhältnis N zwischen der Einlesefrequenz $f_a$ und der Auslesefrequenz $f_s$ erzeugt werden.

2. Verfahren gemäß Anspruch 1, wobei
die Periodendauer der Auslesefrequenz $1/f_s$ kein Vielfaches der Periodendauer der Einlesefrequenz $1/f_a$ ist.

3. Verfahren gemäß einem der vorherigen Ansprüche, wobei
das Verhältnis N durch Mittelung der Anzahlen der zwischen zwei benachbarten Auslesezeitpunkten liegenden Einlesezeitpunkte bestimmt wird.

4. Verfahren gemäß einem der vorherigen Ansprüche, wobei

das Verhältnis N durch einen Filteralgorithmus mit einer variablen Zeitkonstante bestimmt wird; und
die Zeitkonstante im zeitlichen Verlauf des Bestimmens des Verhältnisses N größer wird.

5. Verfahren gemäß einem der vorherigen Ansprüche, wobei

das Verhältnis N im Zeitschritt k nach Beginn der Bestimmung des Verhältnisses N gegeben ist durch:

$$N(k) = (1 - 2^{-q(k)}) \cdot N(k-1) + 2^{-q(k)} \cdot n(k),$$

mit n(k) der Anzahl der im Zeitschritt k aufgetretenen Einlesezeitpunkte, q(k) einer natürlichen Zahl und N(0)=n(0);
jeder Zeitschritt k die Länge einer Periodendauer der Auslesefrequenz $1/f_s$ aufweist; und
q(k) mit zunehmendem k anwächst.

6. Verfahren nach einem der vorherigen Ansprüche, wobei die Ausgabedaten nach einer der folgenden Formeln erzeugt werden:

Fall I:

$$v(k) = v_1(k) \cdot \frac{f_a \cdot t_{1r}(k)}{n_1(k)} + v_0(k) \cdot \frac{N - f_a \cdot t_{1r}(k)}{n_0(k)} - v_r(k),$$

wobei gilt

Anfangsbedingungen:

$$n_0(0) = n_1(0) = N;$$

**11**

$$t_{1r}(0) = v_1(0) = v_r(0) = 0;$$

Zustandsübergänge:

$$n_1(k+1) = n_0(k);$$

$$v_1(k+1) = v_0(k);$$

für

$$N > f_a \cdot t_{1r}(k) + n_0(k):$$

$$v_r(k+1) = v_0(k)/n_0(k) \cdot (N - f_a \cdot t_{1r}(k) - n_0(k));$$

und

$$t_{1r}(k+1) = 0;$$

für

$$N \leq f_a \cdot t_{1r}(k) + n_0(k):$$

$$v_r(k+1) = 0;$$

und

$$t_{1r}(k+1) = 1/f_a \cdot (n_0(k) + f_a \cdot t_{1r}(k) - N);$$

Fall II:

für

$$N > f_a \cdot (t_{2r}(k) + t_{1r}(k)):$$

$$v(k) = v_2(k) \cdot \frac{f_a \cdot t_{2r}(k)}{n_2(k)} + v_1(k) \cdot \frac{f_a \cdot t_{1r}(k)}{n_1(k)} + v_0(k) \cdot \frac{N - f_a \cdot \left(t_{1r}(k) + t_{2r}(k)\right)}{n_0(k)},$$

wobei gilt:

Anfangsbedingungen:

$$n_0(0) = n_1(0) = n_2(0) = f_a \cdot t_{1r}(0) = N;$$

$$t_{2r}(0) = v_1(0) = v_2(0) = 0;$$

Zustandsübergänge:

$$n_1(k+1) = n_0(k);$$

$$n_2(k+1) = n_1(k);$$

$$v_1(k+1) = v_0(k);$$

$$v_2(k+1) = v_1(k);$$

$$t_{1r}(k+1) = 1/f_a\,(n_0(k) - N + f_a\cdot(t_{2r}(k) + t_{1r}(k)));$$

$$t_{2r}(k+1) = 0;$$

für

$$N \leq f_a\cdot(t_{2r}(k) + t_{1r}(k)):$$

$$v(k) = v_2(k)\cdot\frac{f_a\cdot t_{2r}(k)}{n_2(k)} + v_1(k)\cdot\frac{N - f_a\cdot t_{2r}(k)}{n_1(k)},$$

wobei gilt:

Anfangsbedingungen:

$$n_0(0) = n_1(0) = n_2(0) = f_a\cdot t_{1r} = N;$$

$$t_{2r}(0) = v_1(0) = v_2(0) = 0;$$

Zustandsübergänge:

$$n_1(k+1) = n_0(k);$$

$$n_2(k+1) = n_1(k);$$

$$v_1(k+1) = v_0(k);$$

$$v_2(k+1) = v_1(k);$$

$$t_{1r}(k+1) = n_0(k)/f_a;$$

$$t_{2r}(k+1) = t_{2r}(k) + t_{1r}(k) - N/f_a;$$

mit

v(k) den Ausgabedaten, die im k-ten Auslesezeitpunkt ausgelesen werden;

$n_0(k)$ der Anzahl zwischen dem (k-1)-ten Auslesezeitpunkt und dem k-ten Auslesezeitpunkt gelegenen Einlesezeitpunkte;

$n_1(k)$ der Anzahl zwischen dem (k-2)-ten Auslesezeitpunkt und dem (k-1)-ten Auslesezeitpunkt gelegenen Einlesezeitpunkte;

$n_2(k)$ der Anzahl zwischen dem (k-3)-ten Auslesezeitpunkt und dem (k-2)-ten Auslesezeitpunkt gelegenen Einlesezeitpunkte;

$v_0(k)$ der Summe von schrittweisen Änderungen der Messdaten, die zu den Einlesezeitpunkten erfolgt sind, die zwischen dem (k-1)-ten Auslesezeitpunkt und dem k-ten Auslesezeitpunkt lagen;

$v_1(k)$ der Summe von schrittweisen Änderungen der Messdaten, die zu den Einlesezeitpunkten erfolgt sind, die zwischen dem (k-2)-ten Auslesezeitpunkt und dem (k-1)-ten Auslesezeitpunkt lagen;

$v_2(k)$ der Summe von schrittweisen Änderungen der Messdaten, die zu den Einlesezeitpunkten erfolgt sind, die zwischen dem (k-3)-ten Auslesezeitpunkt und dem (k-2)-ten Auslesezeitpunkt lagen;

$t_{1r}$ und $t_{2r}$ Zeitintervallen; und

$v_r$ einem Restterm.

7. Verfahren nach einem der vorherigen Ansprüche, wobei

für die Extrapolation der vor den jeweiligen Auslesezeitpunkten erzeugten Elemente der zeitlichen Folge von Messdaten das mittels des Tiefpassfilters bestimmte Verhältnis N in dem Sensor (200) in einem Regelkreis (230) auf das tatsächliche Verhältnis $N_{REF}$ von Einlesefrequenz $f_a$ und Auslesefrequenz $f_s$ geregelt wird; und das jeweilige Ergebnis der Regelung auf das tatsächliche Verhältnis $N_{REF}$ für die Extrapolation verwendet wird.

8. Verfahren nach Anspruch 7, wobei

die Regelung eine I- oder eine PI-Regelung ist;
die Regelung auf einer Sprungfunktion in N basiert, die bei einem Wert von $N=N_{REF}$ von Null auf einen Wert größer Null springt; und
in der Regelung ein vorgegebener positiver Wert y negativ rückgekoppelt wird, wenn bei anliegendem Istwert von N die Sprungfunktion größer Null ist, und der negative vorgegebene Wert -y negativ rückgekoppelt wird, wenn bei anliegender Istwert von N die Sprungfunktion gleich oder kleiner Null ist.

9. Verfahren nach Anspruch 8 im Rückbezug auf Anspruch 6, wobei

im Fall I die Sprungfunktion sich aus der Anzahl des Eintretens des Falls $N > f_a \cdot t_{1r}(k) + n_0(k)$ in K Zeitschritten $k_{i+1}$ bis $k_{i+K}$, mit i und K natürlichen Zahlen, ergibt; und
im Fall II die Sprungfunktion sich aus der Anzahl des Eintretens des Falls $N > f_a \cdot (t_{2r}(k) + t_{1r}(k))$ in K Zeitschritten $k_{i+1}$ bis $k_{i+K}$, mit i und K natürlichen Zahlen, ergibt.

10. Sensor (200) zum Messen von Messdaten, umfassend:

eine Sensorvorrichtung (210), die zum Bestimmen einer zeitlichen Folge von Messdaten konfiguriert ist, wobei die zeitliche Folge von Messdaten durch schrittweise Änderungen der Messdaten zu Einlesezeitpunkten erzeugt wird, die durch eine Einlesefrequenz $f_a$ bestimmt sind und einen zeitlichen Abstand von einer Periodendauer $1/f_a$ der Einlesefrequenz aufweisen;
einen Filter (240), der konfiguriert ist, auf Anfrage einer externen Vorrichtung Ausgabedaten zu Auslesezeitpunkten auszugeben, die durch eine Auslesefrequenz $f_s$ bestimmt sind und einen zeitlichen Abstand von einer Periodendauer $1/f_s$ der Auslesefrequenz aufweisen, wobei die Auslesefrequenz $f_s$ kleiner als die Einlesefrequenz $f_a$ ist;
einen Tiefpassfilter (220) zum Bestimmen des Verhältnisses N zwischen der Einlesefrequenz $f_a$ und der Auslesefrequenz $f_s$ aus der zeitlichen Folge der Anzahlen der zwischen zwei benachbarten Auslesezeitpunkten liegenden Einlesezeitpunkte; wobei
in dem Filter (240) die zu den Auslesezeitpunkten auszugebenden Ausgabedaten durch Extrapolation von vor den jeweiligen Auslesezeitpunkten erzeugten Elementen der zeitlichen Folge von Messdaten basierend auf dem Verhältnis N zwischen der Einlesefrequenz $f_a$ und der Auslesefrequenz $f_s$ erzeugt werden.

**11.** Inertiales Navigationssystem, umfassend

einen Sensor (200) gemäß Anspruch 10; und
eine Auswerteeinheit (300), die konfiguriert ist, die Ausgabedaten mit der Auslesefrequenz $f_s$ anzufragen und daraus eine Navigationslösung zu berechnen.

**Claims**

**1.** A method for reading data from sensors (200), comprising:

determining a time sequence of measured data by means of a sensor (200), wherein the time sequence of measured data is generated by step-by-step changes in the measured data at read-in times, which are determined by a read-in frequency $f_a$ and have a time interval of a period duration $1/f_a$ of the read-in frequency;
reading output data from the sensor (200) at read-out times, which are determined by a read-out frequency $f_s$ and have a time interval of a period duration $1/f_s$ of the read-out frequency, with the read-out frequency $f_s$ being smaller than the read-in frequency $f_a$;
determining, by means of a low-pass filter (220) of the sensor (200), the ratio N between the read-in frequency $f_a$ and the read-out frequency $f_s$ from the time sequence of the numbers of read-in times lying between two adjacent read-out times; wherein
the output data to be read at the read-out times is generated in the sensor (200) by extrapolation of elements of the time sequence of measured data generated before the particular read-out times based on the ratio N between the read-in frequency $f_a$ and the read-out frequency $f_s$.

**2.** The method according to claim 1, wherein
the period duration of the read-out frequency $1/f_s$ is not a multiple of the period duration of the read-in frequency $1/f_a$.

**3.** The method according to any one of the preceding claims,
the ratio N is determined by averaging the numbers of read-in times lying between two adjacent read-out times.

**4.** The method according to any one of the preceding claims, wherein

the ratio N is determined by a filter algorithm with a variable time constant; and
the time constant becomes larger in the course of time for determining the ratio N.

**5.** The method according to any one of the preceding claims, wherein

the ratio N in the time increment k after the start of the determination of the ratio N is given by:

$$N(k) = (1 - 2^{-q(k)}) \cdot N(k-1) + 2^{-q(k)} \cdot n(k),$$

with n(k) being the number of read-in times that have occurred in the time increment k, q(k) being a natural number and N(0)=n(0);
each time increment k has the length of a period duration of the read-out frequency $1/f_s$; and
q(k) increases with increasing k.

**6.** The method according to any one of the preceding claims, wherein the output data is generated according to any one of the following formulas:

Case I:

$$v(k) = v_1(k) \cdot \frac{f_a \cdot t_{1r}(k)}{n_1(k)} + v_0(k) \cdot \frac{N - f_a \cdot t_{1r}(k)}{n_0(k)} - v_r(k),$$

wherein the following applies:

initial conditions:

$$n_0(0) = n_1(0) = N;$$

$$t_{1r}(0) = v_1(0) = v_r(0) = 0;$$

state transitions:

$$n_1(k+1) = n_0(k);$$

$$v_1(k+1) = v_0(k);$$

for

$$N > f_a \cdot t_{1r}(k) + n_0(k):$$

$$v_r(k+1) = v_0(k)/n_0(k) \cdot (N - f_a \cdot t_{1r}(k) - n_0(k));$$

and

$$t_{1r}(k+1) = 0;$$

for

$$N \le f_a \cdot t_{1r}(k) + n_0(k):$$

$$v_r(k+1) = 0;$$

and

$$t_{1r}(k+1) = 1/f_a \cdot (n_0(k) + f_a \cdot t_{1r}(k) - N);$$

Case II:

for

$$N > f_a \cdot (t_{2r}(k) + t_{1r}(k)):$$

$$v(k) = v_2(k) \cdot \frac{f_a \cdot t_{2r}(k)}{n_2(k)} + v_1(k) \cdot \frac{f_a \cdot t_{1r}(k)}{n_1(k)} + v_0(k) \cdot \frac{N - f_a \cdot (t_{1r}(k) + t_{2r}(k))}{n_0(k)},$$

wherein the following applies:

initial conditions:

$$n_0(0) = n_1(0) = n_2(0) = f_a \cdot t_{1r}(0) = N;$$

$$t_{2r}(0) = v_1(0) = v_2(0) = 0;$$

state transitions:

$$n_1(k+1) = n_0(k);$$

$$n_2(k+1) = n_1(k);$$

$$v_1(k+1) = v_0(k);$$

$$v_2(k+1) = v_1(k);$$

$$t_{1r}(k+1) = 1/f_a (n_0(k) - N + f_a \cdot (t_{2r}(k) + t_{1r}(k)));$$

$$t_{2r}(k+1) = 0;$$

for

$$N \leq f_a \cdot (t_{2r}(k) + t_{1r}(k)):$$

$$v(k) = v_2(k) \cdot \frac{f_a \cdot t_{2r}(k)}{n_2(k)} + v_1(k) \cdot \frac{N - f_a \cdot t_{2r}(k)}{n_1(k)},$$

wherein the following applies:

initial conditions:

$$n_0(0) = n_1(0) = n_2(0) = f_a \cdot t_{1r} = N;$$

$$t_{2r}(0) = v_1(0) = v_2(0) = 0;$$

state transitions:

$$n_1(k+1) = n_0(k);$$

$$n_2(k+1) = n_1(k);$$

$$v_1(k+1) = v_0(k);$$

$$v_2(k+1) = v_1(k);$$

$$t_{1r}(k+1) = n_0(k)/f_a;$$

$$t_{2r}(k+1) = t_{2r}(k) + t_{1r}(k) - N/f_a;$$

with

> $v(k)$ being the output data which are read at the $k^{th}$ read-out time;
> $n_0(k)$ being the number of read-in times positioned between the $(k-1)^{st}$ read-out time and the $k^{th}$ read-out time;
> $n_1(k)$ being the number of read-in times positioned between the $(k-2)^{nd}$ read-out time and the $(k-1)^{st}$ read-out time;
> $nz(k)$ being the number of read-in times positioned between the $(k-3)^{rd}$ read-out time and the $(k-2)^{nd}$ read-out time;
> $v_0(k)$ being the sum of step-by-step changes in the measured data that have taken place at the read-in times that were positioned between the $(k-1)^{st}$ read-out time and the $k^{th}$ read-out time;
> $v_1(k)$ being the sum of step-by-step changes in the measured data that have taken place at the read-in times that were positioned between the $(k-2)^{nd}$ read-out time and the $(k-1)^{st}$ read-out time;
> $vz(k)$ being the sum of step-by-step changes in the measured data that have taken place at the read-in times that were positioned between the $(k-3)^{rd}$ read-out time and the $(k-2)^{nd}$ read-out time;
> $t_{1r}$ and $t_{2r}$ being time intervals; and
> $v_r$ being a residual term.

7. The method according to any one of the preceding claims, wherein,

> for the extrapolation of the elements of the time sequence of measured data generated before the particular read-out times, the ratio N determined by means of the low-pass filter in the sensor (200) is controlled to the actual ratio $N_{REF}$ of the read-in frequency $f_a$ and readout frequency $f_s$ in a control loop (230); and
> the particular result of the control to the actual ratio $N_{REF}$ is used for the extrapolation.

8. The method according to claim 7, wherein

> the control is an I or a PI control;
> the control is based on a jump function in N, which jumps from zero to a value greater than zero at a value of $N=N_{REF}$; and
> in the control, a given positive value y is fed back negatively if the jump function is greater than zero when the actual value of N is present, and the negative given value -y is fed back negatively if the jump function is equal to or less than zero when the actual value of N is present.

9. The method of claim 8 in connection with claim 6, wherein

> in case I, the jump function is derived from the number of occurrences of the case $N > f_a \cdot t_{1r}(k) + n_0(k)$ in K time increments $k_{i+1}$ to $k_{i+K}$, with i and K being natural numbers; and
> in case II, the jump function is derived from the number of occurrences of the case $N > f_a \cdot (t_{2r}(k) + t_{1r}(k))$ in K time increments $k_{i+1}$ to $k_{i+K}$, with i and K being natural numbers.

10. A sensor (200) for measuring measured data, comprising:

> a sensor device (210) which is suitable for determining a time sequence of measured data, with the time sequence of measured data being generated by step-by-step changes in the measured data at read-in times which are determined by a read-in frequency $f_a$ and a time interval of a period duration $1/f_a$ of the read-in frequency;
> a filter (240) which is suitable, upon request from an external device, to output output data at read-out times which is determined by a read-out frequency $f_s$ and have a time interval of a period duration $1/f_s$ of the read-out frequency, with the read-out frequency $f_s$ being less than the read-in frequency $f_a$;
> a low-pass filter (220) for determining the ratio N between the read-in frequency $f_a$ and the read-out frequency $f_s$ from the time sequence of the numbers of read-in times lying between two adjacent read-out times; wherein

the output data to be output at the read-out times is generated in the filter (240) by extrapolation of elements of the time sequence of measured data generated before the particular read-out times based on the ratio N between the read-in frequency $f_a$ and the read-out frequency $f_s$.

11. An inertial navigation system, comprising:

an sensor (200) according to claim 10; and
an evaluation unit (300) which is suitable for requesting the output data at the read-out frequency $f_s$ and calculating a navigation solution from this.

**Revendications**

1. Procédé pour extraire des données de capteurs (200), comprenant :

déterminer une suite temporelle de données de mesure au moyen d'un capteur (200), dans lequel la suite temporelle de données de mesure est générée par des modifications par étapes des données de mesure à des dates de lecture qui sont déterminées par une fréquence de lecture $f_a$ et présentent un intervalle de temps d'une durée de période $1/f_a$ de la fréquence de lecture ;
extraire des données de sortie du capteur (200) à des dates d'extraction qui sont déterminées par une fréquence d'extraction $f_s$ et présentent un intervalle de temps d'une durée de période $1/f_s$ de la fréquence d'extraction, dans lequel la fréquence d'extraction $f_s$ est inférieure à la fréquence de lecture $f_a$ ;
déterminer le rapport N entre la fréquence de lecture $f_a$ et la fréquence d'extraction $f_s$ à partir de la suite temporelle des nombres des dates de lecture situées entre deux dates d'extraction voisines au moyen d'un filtre passe-bas (220) du capteur (200) ; dans lequel
dans le capteur (200), les données de sortie à extraire aux dates d'extraction sont générées par extrapolation d'éléments générés avant les dates d'extraction respectives de la suite temporelle de données de mesure sur la base du rapport N entre la fréquence de lecture en entrée $f_a$ et la fréquence d'extraction $f_s$.

2. Procédé selon la revendication 1, dans lequel
la durée de période de la fréquence d'extraction $1/f_s$ n'est pas un multiple de la durée de période de la fréquence de lecture $1/f_a$.

3. Procédé selon l'une des revendications précédentes, dans lequel
le rapport N est déterminé en faisant la moyenne des nombres des dates de lecture situées entre deux dates d'extraction voisines.

4. Procédé selon l'une des revendications précédentes, dans lequel

le rapport N est déterminé par un algorithme de filtrage avec une constante de temps variable ; et
la constante de temps augmente au cours du temps de la détermination du rapport N.

5. Procédé selon l'une des revendications précédentes, dans lequel

le rapport N au pas de temps k après le début de la détermination du rapport N est donné par :

$$N(k) = (1\text{-}2^{-q(k)}) \cdot N(k\text{-}1) + 2^{-q(k)} \cdot n(k),$$

avec n(k) le nombre des dates de lecture survenues au pas de temps k, q(k) un nombre naturel et N(0)=n(0) ; chaque pas de temps k présente la longueur d'une durée de période de la fréquence d'extraction $1/f_s$ ; et q(k) augmente avec k croissant.

6. Procédé selon l'une des revendications précédentes, dans lequel les données de sortie sont générées selon l'une des formules suivantes :

Cas 1 :

$$v(k) = v_1(k) \cdot \frac{f_a \cdot t_{1r}(k)}{n_1(k)} + v_0(k) \cdot \frac{N - f_a \cdot t_{1r}(k)}{n_0(k)} - v_r(k),$$

dans lequel on a

conditions initiales :

$$n_0(0) = n_1(0) = N \ ;$$

$$t_{1r}(0) = v_1(0) = v_r(0) = 0 \ ;$$

transitions d'état :

$$n_1(k+1) = n_0(k) \ ;$$

$$v_1(k+1) = v_0(k) \ ;$$

pour

$$N > f_a \cdot t_{1r}(k) + n_0(k) :$$

$$v_r(k+1) = v_0(k)/n_0(k) \cdot (N - f_a \cdot t_{1r}(k) - n_0 \ (k)) \ ;$$

et

$$t_{1r}(k+1) = 0 \ ;$$

pour

$$N \leq f_a \cdot t_{1r}(k) + n_0(k) :$$

$$v_r(k+1) = 0 \ ;$$

et

$$t_{1r}(k+1) = 1/f_a \cdot (n_0(k) + f_a \cdot t_{1r}(k) - N) \ ;$$

Cas II :

pour

$$N > f_a \cdot (t_{2r}(k) + t_{1r}(k)) :$$

$$v(k) = v_2(k) \cdot \frac{f_a \cdot t_{2r}(k)}{n_2(k)} + v_1(k) \cdot \frac{f_a \cdot t_{1r}(k)}{n_1(k)} + v_0(k) \cdot \frac{N - f_a \cdot (t_{1r}(k) + t_{2r}(k))}{n_0(k)},$$

dans lequel on a :

conditions initiales :

$$n_0(0) = n_1(0) = n_2(0) = f_a{\cdot}t_{1r}(0) = N \ ;$$

$$t_{2r}(0) = v_1(0) = v_2(0) = 0 \ ;$$

transitions d'état :

$$n_1(k+1) = n_0(k) \ ;$$

$$n_2(k+1) = n_1(k) \ ;$$

$$v_1(k+1) = v_0(k) \ ;$$

$$v_2(k+1) = v_1(k) \ ;$$

$$t_{1r}(k+1) = 1/f_a \ (n_0(k) - N + f_a{\cdot}(t_{2r}(k) + t_{1r}(k))) \ ;$$

$$t_{2r}(k+1) = 0 \ ;$$

pour

$$N \leq fa{\cdot}(t2r(k) + t1r(k)) :$$

$$v(k) = v_2(k) \cdot \frac{f_a \cdot t_{2r}(k)}{n_2(k)} + v_1(k) \cdot \frac{N - f_a \cdot t_{2r}(k)}{n_1(k)},$$

dans lequel on a :

conditions initiales :

$$n_0(0) = n_1(0) = n_2(0) = f_a{\cdot}t_{1r} = N \ ;$$

$$t_{2r}(0) = v_1(0) = v_2(0) = 0 \ ;$$

transitions d'état :

$$n_1(k+1) = n_0(k) \ ;$$

$$n_2(k+1) = n_1(k) \ ;$$

$$v_1(k+1) = v_0(k) \; ;$$

$$v_2(k+1) = v_1(k) \; ;$$

$$t_{1r}(k+1) = n_0(k)/f_a \; ;$$

$$t_{2r}(k+1) = t_{2r}(k) + t_{1r}(k) - N/f_a \; ;$$

avec

$v(k)$ les données de sortie qui sont extraites à la k-ième date d'extraction ;
$n_0(k)$ le nombre de dates de lecture situées entre la (k-1)-ième date d'extraction et la k-ième date de lecture ;
$n_1(k)$ le nombre de dates de lecture situées entre la (k-2)-ième date d'extraction et la (k-1)-ième date d'extraction ;
$n_2(k)$ le nombre de dates de lecture situées entre la (k-3)-ième date d'extraction et la (k-2)-ième date d'extraction ;
$v_0(k)$ la somme de modifications progressives des données de mesure qui ont été effectuées aux dates de lecture qui se situaient entre la (k-1)-ième date d'extraction et la k-ième date d'extraction ;
$v_1(k)$ la somme de modifications progressives des données de mesure qui ont été effectuées aux dates de lecture qui se situaient entre la (k-2)-ième date d'extraction et la (k-1)-ième date d'extraction ;
$v_2(k)$ la somme de modifications progressives des données de mesure qui ont été effectuées aux dates de lecture qui se situaient entre la (k-3)-ième date d'extraction et la (k-2)-ième date d'extraction ;
$t_{1r}$ et $t_{2r}$ des intervalles de temps ; et
$v_r$ un délai restant.

**7.** Procédé selon l'une des revendications précédentes, dans lequel

pour l'extrapolation des éléments de la suite temporelle de données de mesure générés avant les dates d'extraction respectives, le rapport N déterminé au moyen du filtre passe-bas dans le capteur (200) est régulé dans un circuit de régulation (230) sur le rapport réel NREF de la fréquence de lecture $f_a$ et la fréquence d'extraction $f_s$ ; et
le résultat respectif de la régulation sur le rapport réel NREF est utilisé pour l'extrapolation.

**8.** Procédé selon la revendication 7, dans lequel

la régulation est une régulation 1 ou PI ;
la régulation est basée sur une fonction de saut en N qui passe de zéro à une valeur supérieure à zéro lorsque N=NREF ; et
dans la régulation, une valeur positive prédéfinie y est rétroactionnée négativement si en présence d'une valeur réelle de N la fonction de saut est supérieure à zéro, et la valeur négative prédéfinie -y est rétroactionnée négativement si en présence d'une valeur réelle de N la fonction de saut est égale ou inférieure à zéro.

**9.** Procédé selon la revendication 8 en référence à la revendication 6, dans lequel

dans le cas I, la fonction de saut résulte du nombre d'occurrences du cas $N > f_a \cdot t_{1r}(k) + n_0(k)$ en K pas de temps ki+i jusqu'à $k_{i+K}$, avec i et K des nombres naturels ; et
dans le cas II, la fonction de saut résulte du nombre d'occurrences du cas $N > f_a \cdot (t_{2r}(k) + t_{1r}(k))$ en K pas de temps ki+i jusqu'à $k_{i+K}$, avec i et K des nombres naturels.

**10.** Capteur (200) de mesure de données de mesure, comprenant :

un dispositif capteur (210), qui est configuré pour déterminer une suite temporelle de données de mesure, dans lequel la suite temporelle de données de mesure est générée par des modifications progressives des données de mesure à des dates de lecture qui sont déterminées par une fréquence de lecture $f_a$ et qui présentent un intervalle de temps d'une durée de période $1/f_a$ de la fréquence de lecture ;

un filtre (240), qui est configuré pour émettre, à la demande d'un dispositif externe, des données de sortie à des dates d'extraction qui sont déterminées par une fréquence d'extraction $f_s$ et qui présentent un intervalle de temps d'une durée de période $1/f_s$ de la fréquence d'extraction, dans lequel la fréquence d'extraction $f_s$ est inférieure à la fréquence de lecture $f_a$ ;

un filtre passe-bas (220), destiné à déterminer le rapport N entre la fréquence de lecture $f_a$ et la fréquence d'extraction $f_s$ à partir de la suite temporelle des nombres des dates de lecture situées entre deux dates d'extraction voisines ; dans lequel

dans le filtre (240), les données de sortie à émettre aux dates d'extraction sont générées par extrapolation d'éléments générés avant les dates d'extraction respectives de la suite temporelle de données de mesure sur la base du rapport N entre la fréquence de lecture en entrée $f_a$ et la fréquence d'extraction $f_s$.

11. Système de navigation inertielle, comprenant

un capteur (200) selon la revendication 10 ; et
une unité d'évaluation (300) qui est configurée pour demander les données de sortie avec la fréquence d'extraction $f_s$ et pour calculer sur cette base une solution de navigation.

# Fig. 1

Teilinkremente

1/f$_a$

1/ f$_s$

Zeit

Gesamtinkremente

# Fig. 2

S100

Bestimmen einer zeitlichen Folge von schrittweise Änderungen von Bewegungsdaten mit einer Einlesefrequenz $f_a$

S110

Bestimmen des Verhältnisses N zwischen der Einlesefrequenz $f_a$ und einer Auslesefrequenz $f_s$ aus der zeitlichen Folge der Anzahlen der zwischen zwei benachbarten Auslesezeitpunkten liegenden Einlesezeitpunkte mittels eines Tiefpassfilters

S120

Extrapolation von vor den jeweiligen Auslesezeitpunkten erzeugten Elementen der zeitlichen Folge von Bewegungsdaten basierend auf dem Verhältnis N zwischen der Einlesefrequenz $f_a$ und der Auslesefrequenz $f_s$

S130

Auslesen von Ausgabedaten mit der Auslesefrequenz $f_s$

# Fig. 3

## Einschwingvorgang des Filters

# Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013020954